(19) Europäisches Patentamt
European Patent Office
Office européen des brevets

(11) **EP 4 354 216 A1**

(12) **EUROPEAN PATENT APPLICATION**

(43) Date of publication:
**17.04.2024 Bulletin 2024/16**

(21) Application number: **23203351.4**

(22) Date of filing: **12.10.2023**

(51) International Patent Classification (IPC):
**G02F 1/33** (2006.01)

(52) Cooperative Patent Classification (CPC):
**G02F 1/33**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2022 GB 202215034**

(71) Applicant: **Gooch & Housego (Torquay) Ltd Torquay TQ2 7QL (GB)**

(72) Inventors:
- **Kean, Peter**
  **Newton Abbot, TQ12 3FX (GB)**
- **Jain, Saurabh**
  **Torquay, TQ2 7GW (GB)**
- **Kehayas, Efstratios**
  **Discovery Bay, 94505 (US)**

(74) Representative: **Wellburn, Daniel et al Kilburn & Strode LLP Lacon London 84 Theobalds Road London WC1X 8NL (GB)**

(54) **OPTICAL BEAM INTENSITY MODULATOR**

(57)     An optical beam intensity modulator comprising a modulator element arranged to transmit an optical beam along a first path in a first modulator state as a first beam and along a second, deviated path in a second modulator state as a second beam, and a beam return element arranged to return a transmitted beam to the modulator element.

FIG. 6

EP 4 354 216 A1

## Description

The invention relates to an optical beam intensity modulator for example an acousto-optic intensity modulator.

BACKGROUND

Acousto-optic devices, such as acousto-optic modulators are well known. In general terms, acousto-optic modulators use soundwaves applied to a modulator element in order to diffract an incident light beam. The term "light" is used here to mean any electromagnetic radiation - which may include, but is not limited to, visible light. Similarly, the term "soundwaves" relates to any form of acoustic or compression waves in a medium not restricted to sound. This acousto-optic interaction between a soundwave and a light beam takes place within a modulator element comprising an acousto-optic medium or substrate which can comprise any suitable material, for example glass or quartz. The soundwaves are typically generated using an acoustic-wave generator such as radio frequency (RF) driver which is attached to the acoustic-optic medium and can be used to generate one or more acoustic frequencies. For example, a piezoelectric acoustic-wave generator such as a piezoelectric transducer may be used. The soundwaves create vibrations which cause a periodic perturbation in the refractive index of the acoustic-optic medium. As a result of this periodically varying refractive index the light is scattered and an interference pattern resembling Bragg diffraction can be seen in the light emitted from the acousto-optic medium. In particular, the light beam diffracts from a periodic perturbation caused by the acoustic-wave; in addition, the frequency changes because of a Doppler shift caused by the acoustic-wave phonon-photon interaction.

In practice, acousto-optic devices are commonly employed in applications such as laser applications, telecommunications and spectroscopy. In the case of intensity modulated systems, the incident light beam can be modulated between an off (0) state where the acousto-optic modulator is not activated, and an on (1) state when an acoustic-wave is generated to activate the modulator. In such arrangements a high extinction ratio, that is, the difference between the energy of the on and off states, is desirable and there is increasing demand for very high extinction ratios in fields such as quantum technology applications where optical switches with ultra-high extinction ratios in the region of 90dB or more are required.

According to known approaches, such an extinction ratio is difficult to obtain. Existing approaches have included providing two or more serially connected intensity modulating acousto-optic cell modules. However, there are multiple problems with such arrangements including higher optical loss, larger footprint and weight, requirement for either two drivers to create the acoustic waves or higher power split drivers, driver synchronisation for multiple drivers, higher total operational power, more components and hence cost and more complex RF driver design compared to single acoustic acousto-optic modulator cell designs.

The invention is set out in the claims. By providing an optical beam intensity modulator with a beam return element which returns a transmitting beam to the modulator element, the extinction ratio is increased with minimal additional components and complexity.

FIGURES

The embodiments of the invention will now be described, by way of example, with reference to the drawings, of which:

FIG. 1 shows a known optical beam intensity modulator;
FIG. 2 shows an optical beam intensity modulator according to a first embodiment of the invention;
FIG. 3 shows an optical beam intensity modulator according to a second embodiment of the invention;
FIG. 4 shows an optical beam intensity modulator according to a third embodiment of the invention;
FIG. 5 shows an example geometry acousto-optic element for use in any of the embodiments of the invention;
FIG. 6 shows a more detailed schematic of the optical beam intensity modulator according to the first embodiment;
FIG. 7 shows plots of extinction ratio and insertion loss vs separation distance for an example optical beam intensity modulator; and
FIG. 8 shows a method for determining a separation distance.

OVERVI EW

In overview an optical beam intensity modulator or shutter such as an acousto-optic modulator comprises a modulator element such as an acousto-optic element which transmits an incident optical beam along a first, undeviated path in an off state, comprising a first beam or an undeviated beam or zeroth order beam, and along a second, spatially deviated or shifted or displaced path in a second, on state, comprising a second or deviated beam, the deviation in typical arrangements being equivalent to the first order Bragg angle.

A beam return element such as a retro-reflector returns the transmitted beam to the modulator element. This arrangement provides improved spatial separation and/or decoupling of the zeroth and first order beams; this is beneficial as a receiver such as an output collimator is generally aligned with the first order beam path which otherwise can receive unwanted zeroth order light because of the small diffraction (Bragg) angle between the orders. When the modulator element is in the off state, that is in the absence of an RF or other driver signal, optical scatter within the acousto-optic element occurs, but because of the enhanced separation owing to the beam return element and double pass of the modulator element, scattering into the receiver is reduced, hence reducing the intensity value received in the off state. In the on state, the scattering effect is corresponding limited and the improved separation of the first order beam from the zeroth order beam allows the extinction ratio to be significantly improved. In a preferred embodiment the retro-reflector introduces a relative lateral displacement or shift of the first order and zeroth order beams as they traverse different paths; this use of an offset design - for example using a prism as retro-reflector - prevents any back reflection of the zeroth order beam reaching the output collimator.

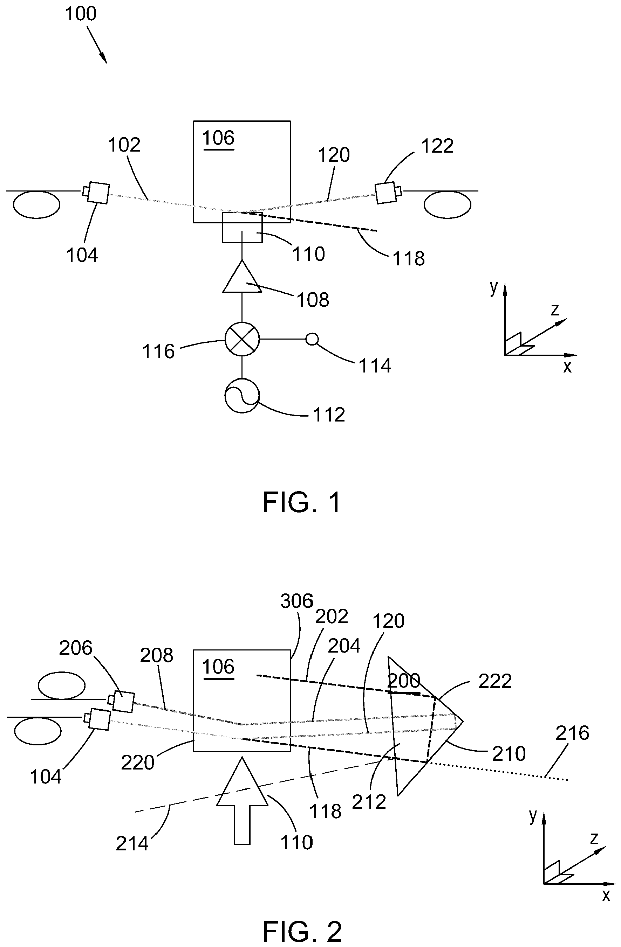

Referring now to FIG. 1, a known type of acousto-optic intensity modulator is designated generally 100, the plane of the paper being in the XY plane in the coordinate system shown, and the Z direction being perpendicular to the plane of the paper. An input beam 102 generated by laser/optics such as an input collimator (or input beam element) 104 is incident generally in the X direction on an acousto-optic cell 106 for example, an acousto-optic crystal. An acoustic wave is generated by an RF amplifier 108 driving a piezoelectric crystal 110. The desired acoustic wave parameters can be generated for example by combining an oscillator input 112 with a modulating input 114 at a mixer 116. In the off state, a zeroth order undeviated beam 118 corresponding to the incident beam 102 is transmitted by the modulator element 106. In an on state the RF driver 108 and transducer 110 create an acoustic wave in the acousto-optic cell 106 which generates periodic perturbation causing diffraction of the light beam as a deviated beam along the Bragg diffraction angle (first order) 120. An output collimator (or output beam element) 122 is positioned at the Bragg angle and receives the diffracted light in the on state. It will be seen that in such an arrangement the extinction ratio is limited by reception of scattered and diffracted portions of the zeroth order beam; in the off state there is scattering and in addition the very small Bragg angle means that some of the zeroth order beam is captured by the receiver 122..

A first embodiment of the invention will now be described with reference to FIG. 2 where common reference numerals and axes denote common elements. It will be seen, in particular, that instead of having an output collimator receiving element 122 on the transmit side of the acousto-optic element 106, instead a beam return element such as a reflector prism or retro-reflector 200 is provided.

The input collimator comprises an incident beam generator which transmits a beam which is incident on a front surface 220 of the acousto-optic element 106. When the RF driver 110 is off and the acousto-optic element 106 is not perturbed the undeviated or zeroth order beam passes through the rear surface 306 of the acousto-optic element and to the retro-reflector 200. The retro-reflector 200 has a front generally planar surface 212 on which the beam is incident and two rear faces 210, 212 angled, preferably, at 90° and more preferably precisely (within natural tolerances) at 90° to another forming, in cross-section, a right-angled triangle with the front face 212 and, in three dimensions, a right-angled triangular cross section prism. The geometry of the retro-reflector is well known and ensures that any incident beam on the front face 212 will be displaced by reflection sequentially on the first and second rear faces 210, 222 and transition back through the front face 212 to the acousto-optic modulator element 106 at the same angle as the incident angle, that is through a deflection summing to 180°.

When the RF driver is in the on state a first order wave 120 at a Bragg diffraction angle is created. This passes through the retro-reflector 200 in the same manner and the return first order beam 204 is returned at the same angle as the incident first order beam 120. As the retro-reflector returns the beams at the respective incident angles, but reflected 180°, and as the zeroth order beam and 118 and first order beam 120 are angularly separated after the first pass of the modulator element, this gives rise to a spatial separation, or lateral displacement of the return zeroth order beam 202 and first order beam 204 generally in the Y direction as they are incident at different locations on the rear faces 210, 222 of the retro-reflector 200. Because of the 180° return angle, the return beam is received once again at the Bragg angle at the rear face 306 acousto-optic element 106, causing diffraction once again and further angular separation between the zeroth and first order beams. The output collimator receiver 206 is provided at the relevant Bragg angle to receive the doubly refracted first order return beam 208, in the embodiment shown, parallel to the input collimator.

As a result, when the RF driver is in the off state, the output collimator 206 receives zero signal or minimal signal because of the further relative deviation of the zeroth order beam, reducing the coupling of the scattered and diffracted portions of the zeroth order beam. When the RF generator 110 is in the on state then the output collimator 206 receives a high signal from the first order beam. As a result the extinction ratio is enhanced (it will be noted that as a general principle, by minimising the received signal in the off state, improved extinction ratio can be achieved).

It will be seen that there are multiple technical solutions according to the embodiment shown in FIG. 2. In addition to the double pass optical beam diffraction with spatial offset through the acousto-optic cell enhancing the overall extinction ratio through rejection of scattered light, the approach is evidently more compact than providing two separate acousto-optic modules optically connected together to achieve extinction ratio, involving less component count and lower operational requirements. The beam offset and hence the separation of the zeroth and first order pass reduces back-reflections of the zeroth order beam being received by the output collimator, removing the difficulties where the same output and input beam path are shared. The insertion loss is reduced compared to two acousto-optic modules optically connected together and the extinction ratio requirement of the RF driver for achieving the same optical extinction ratio is reduced by the approach according to the invention compared to a standard single pass design. An additional benefit of the frequency shift of acousto-optic element first order diffracted beams is that the double pass offset design results in double the frequency shift compared with single pass designs.

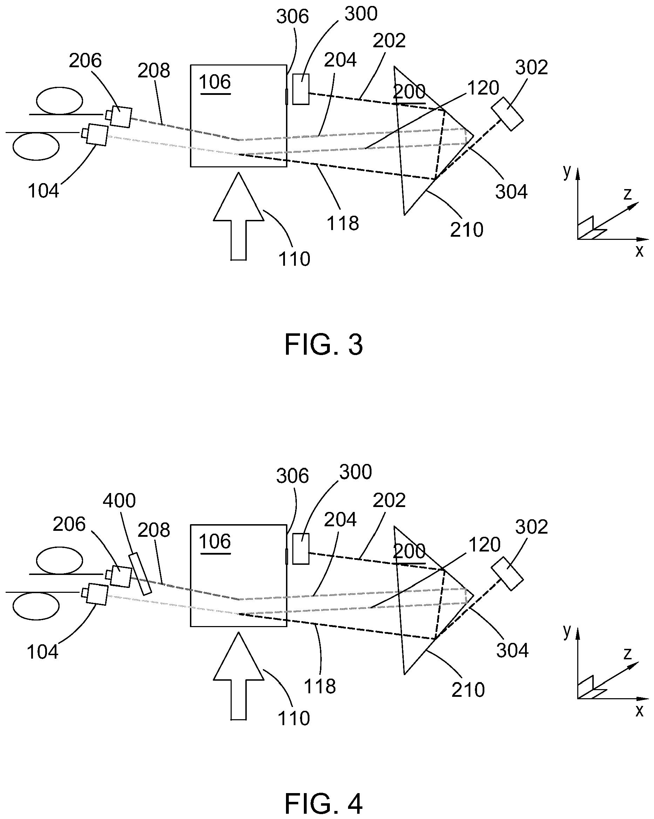

It will be noted that the extinction ratio can be yet further enhanced by adopting additional design constraints; which can be beneficial especially in view of the low light constraints that may be encountered in some applications. For example, the input light source can be collimated from a single mode polarisation maintaining fibre which can be beneficial, for example, in polarisation extinction approaches of the type described below and with relation to FIG. 3. Typically for optimal differentiation between first and zeroth order beams in the on-state, the collimated light source 104 is preferably aligned to the front surface 220 of the acousto-optic cell 106 at the Bragg angle. The retro-reflector will reflect the beam at 180 degree irrespective of RF drive frequency.

In another preferred approach the retro-reflector 222 can be tilted about the Z axis to increase the differential loss between the zeroth and first orders of the first pass beams 118, 120 transmitted by the modulator element 106 such that the first order beam 120 has an incident angle at the retro-reflector rear surface 210 optimised for efficient total internal reflection (in other words none or very little is transmitted from the rear of the retro-reflector 200) while the zeroth order beam 118 angle incident on the rear surface 210 can be just below the total internal reflection angle, as a result of its increased angle relative to the surface 210 compared to the first order beam as can be seen in Figs. 2 to 4. This can give rise to a 30% to 50% loss of the zeroth order beam 304 via transmission, resulting in extra improvement in the extinction ratio without any compromise in other performance parameters. The optimised tilt angles can be found experimentally with no undue burden on the skilled reader simply by measuring reflected light for the first order beam, identifying the tilt angle beyond which the reflected amount drops and tilting back just until total internal reflectivity is achieved; the zeroth order will be at least partially transmitted (and hence lost) at the same prism tilt angle because of its increased angle relative to the surface 210.

Additionally, the prism 200 can be angled or shaped such that the input/output or front face 212 directs any reflected portion of the first pass zeroth order beam 118 away from the acousto-optic element 106, reducing zeroth order light scattered back into the modulator element 106. As a result, the zeroth order beam intensity is lost by reflection from the front surface (see beam 214) and transmission by the back surface (see beam 216) of the retro-reflector 200. Again the desired angle can be obtained experimentally using the approach described above.

Another preferred approach ensures that the retro-reflector 200 is aligned to maximise the Bragg efficiency of the return pass of the first order beam 204 to account for the beam deviation in the first pass.

The distance between the acousto-optic element 106 and the retro-reflector 200 generally in the X direction can be selected experimentally without burden on the skilled reader, ensuring the technical effect of achieving optimal lateral displacement between the beams. In another preferred modification, the retro-reflector 200 is positioned laterally offset in the Y direction to incur a further lateral offset of the output beam 120 compared to the input beam 118 which allows for further separating the path of the output beam for the first order 204 from the zeroth order beam 202 and its scattered light and hence isolating it from the output receiver 206, since the angle subtended by the direct scattered light from different points in the beam path will subtend a higher angle on the collimator resulting in its poor coupling. The offset distance can be determined experimentally but in an embodiment may be in the range 0-6 mm, preferable >2mm, more preferable in the range 2-4mm.

Referring now to FIG. 3 a second embodiment of the invention is set out; common features are found with the first embodiment in many instances and like reference numerals denote like elements; aspects of the embodiments are interchangeable as will be apparent from the following description.

In particular, beam blocks 300, 302 are provided in the path of the zeroth order beam 118 to further supress the zeroth order beam and provide improved extinction ratio without incurring losses. The path may be referred to as the undeviated beam path or the first beam path, and denotes the path taken by the zeroth order beam (or incident beam, in the off-state) through the various optical components, that is, the modulator 106 on the first and second passes and the retro-reflector 200. A first beam block 300 is placed in between the retro-reflector 200 and the acousto-optic element 106 in the path of the undeviated beam 202, after reflection by the retro-reflector. In particular this prevents the 202 beam returning into the acousto-optic element 106 which in turn reduces the risk of scatter into the output collimator 206 and/or angular deviation into the output collimator 206. A second beam block 302 is provided beyond the retro-reflector 200 to block or absorb any portion of the zeroth order beam which is transmitted by the rear face 210 of the retro-reflector 200, which can beneficial in removing unwanted reflections in a closed system. As mentioned above, this can be particularly beneficial in instances where the rear face is angled such that there is non-total internal reflection at the incident angle for the zeroth order beam 118 incident on the rear face 210 of the retro-reflector 200.

The beam block 300 can be achieved in multiple ways. It can be a specific absorptive element 204 or it can be achieved by angling the rear surface 306 of the acousto-optic element 106 (that is, the surface furthest from the input collimator 104) to suppress transmission/enhance reflection of the reflected zeroth order beam 202 which can give rise to a further improvement of the extinction ratio by 5-10dB. In particular it can be achieved by suitable angling/coating of relevant parts of the acousto-optic element surface 106 that encounter the zeroth but not the first order beam.

FIG. 4 shows a third embodiment including a polarisation extinction ratio enhancement. In particular a polarisation beam splitter plate, or polariser 400 is inserted in the return path 204 of the deviated first order beam 120 between the acousto-optic element 106 and the output collimator 206. In such an arrangement, the polarisation direction of the input collimator 104 and output collimator 206 are aligned. In certain types of AO modulator, for example of the type using shear waves and anisotropic interaction, the initial polarisation of the incident undeviated beam 118 is altered by the acoustic wave interaction - an artefact of the photon-phonon interaction - such that the polarisation of the first order beam 120 differs from the zeroth order. As a result the polarisation of the polarisation beam splitter 400 can be selected to extinguish that of the known zeroth order beam (or reflect it out of the system as appropriate) whilst the polarisation beam splitter 400 will pass the first order beam, hence improving the extinction ratio further.

Yet further, in the polarisation enhancement optimisation, P polarisation specifically can be used to provide higher differential loss to the zeroth order beam via the prism. This is achieved because of the different reflectivity encountered by different polarisations at the reflecting surface, at incident angles below total internal reflection, in particular lesser reflectivity for P polarisation (the zeroth order beam). As the first order beam will have a different polarisation a lesser proportion of the zeroth order beam is thus reflected compared to the first order beam.

Yet further, the beam can be offset in the vertical domain which can help with faster response times. In particular, in one embodiment, by using a corner cube prism, offset in the vertical Z-direction can be provided whilst returning the beam at the Bragg angle in the XY plane. The alignment can further tuned to correct for any deviation of the beam which in turn will optimise the Bragg efficiency on the return pass. There may be slight offset introduced in the XY plane as well in order to reduce the coupling losses observed by the beam hitting the edge of the corner cube.

It will be seen that the polarisation difference in appropriate acousto-optic modulators between the zeroth order and first order beam is leveraged to improve filtering out of the zeroth order beam yet more; the polarisation beam splitter 400 can be replaced by any appropriate polarisation blocking element, but in the polarisation beam splitter example, a polarisation sensitive reflective surface at 45° to the incident beam angle will mean that the zeroth order elements will be reflected off whilst the first order elements will be transmitted, once again enhancing the extinction ratio.

It will be noted that the alternative embodiments can be combined as appropriate. For example the second and third embodiments are shown combined in FIG. 4 but it will be seen that the polarisation and beam block elements can alternatively be used in isolation.

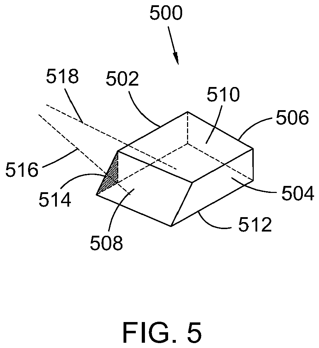

Referring to FIG. 5, an example geometry is shown for the acousto-optic element described herein, and usable in conjunction with any of the embodiments described. The element 500 includes a vertical beam ouput face 502, a generally parallel input face 504 a vertical transducer or RF drive receiving face 506 perpendicular to and joining the input and output faces, an opposing absorber/reflector face 508 angled to the vertical and joining the input and output faces and top and bottom faces 510, 512. The beam output face includes a triangular (or other desired shape) region 514 adjoining or part of the absorber/reflector face 502 on which the zeroth order beam 516 (shown returning from a beam return element) but not the first order beam 518 is incident. The region 514 can be angled or coated in the manner described above to provide angular deflection or absorption of the zeroth order beam hence enhancing the extinction ratio. The absorber/reflector face 508 can reflect the acoustic waves generated at the transducer face 506 but can be roughened to block the zeroth order beam on the return pass.

Further enhancements are disclosed herein. The surface quality or characteristics of the components can be improved to reduce scattering of the zeroth order beam through enhanced specular reflection proportion. The prism material can be optimised to obtain desired total internal reflection differentiation as discussed above. The arrangement can naturally be configured to operate at any RF driving frequency, core beam wavelength or change in wavelength, for example by tuning the offset design or relative positions of the components. An asymmetric collimator (input and output collimators different or with different operational characteristics) can be used to improve loss and extinction ratio.

It will be appreciated that the input and output collimators can be any appropriate devices for example a laser pulse can be provided by the input collimator which can comprise a single mode polarisation maintaining fibre. Similarly, the output collimator can provide any appropriate laser beam transmission element such as a single mode polarisation maintaining fibre. The polarisation can be selected as appropriate and if needed collimators can be rotated to align the polarisation with respect to the prism. Alternatively a free space arrangement can be provided for example using a laser for input and receiver optic element for output without the use of collimators.

The acousto-optic modulator can be of any appropriate type for example the type available from Gooch and Housego under the product name G&H Fibre-Q AOM. The element can be made of any appropriate material and can be of any appropriate shape and dimension. The transducer can be a piezo electric element and can interact with the acousto-optic material through direct contact or any other appropriate mode of interaction and in any appropriate frequency range, for example RF. In the embodiments shown the acousto-optic cell faces are shown generally parallel to one another but alternative geometries can be considered and the diffraction angle achieved by the system determined by the Bragg condition coupled with refraction at the AO surfaces in a manner that will be apparent to the skilled reader.

The retro-reflector prism can be made of any appropriate material and have any appropriate shape, for example a right angled triangle in cross section. The prism is typically anti-reflection coated to ensure optimal coupling of the input beams; of course the reflectivity of the anti-reflection coating can be angle dependent to pass the first order beam more efficiently than the zeroth order beam. The rear total internal reflection surfaces are suitably polished to maximise total internal reflection of the beams.

In terms of the geometry of the retro-reflector, it can simply be placed with the front surface parallel to the acousto-optic modulator rear surface or at angles thereto as discussed in more detail above to enhance the extinction ratio. The retroreflector is preferably aligned such that the return beam angle is at the Bragg angle of the Acousto optic modulator to enhance separation of the beams.

Any level of collimation is desirable but practically a beam diameter and divergence after the input collimator are typically designed to minimise the loss for given optical working distance between the input and output collimator and lenses are chosen such that the diffraction is minimum as will be apparent to the skilled reader.

The beam blocks can be any appropriate components such as metal absorber blocks with channels machined to dump the beam or highly absorbing coated blocks.

It will be seen that according to the approach described herein, the extinction ratio is significantly improved by various techniques which decouple and remove the zeroth order beam at the output collimator such that the noise floor is reduced in the off state and unwanted artefacts are reduced in the on state. It will be noted that the approach can be applied in various scenarios using any appropriate input and output signal generating and receiving means. Any appropriate retro-reflector will be suitable with or without the additional reflection, geometry and polarisation aspects mentioned above such as a corner cube, or a pair of mirrors such as knife edge mirrors (minimising any spacing at the junction) positioned at 90°. Such a configuration provides yet further optimised beam steering by providing a further degree of freedom (variable angle between back surfaces). In other embodiments a rhomboid or other geometry component can be introduced between the acousto-optic modulator and collimators and/or prism increasing the number of reflection steps and hence further increasing the offset and hence decoupling of the beams.

The inventors have recognised the significance of Equation 1 in the apparatuses and methods described herein:

$$\sin\theta = \frac{\lambda f}{v} \qquad\qquad \text{Equation 1}$$

In equation 1, $\theta$ is the angle of separation between the zeroth order and the first order beams upon diffraction (i.e. the angle between paths 118 and 120), $\lambda$ is the wavelength of the input light in the modulator element medium, $f$ is the RF frequency of the acoustic wave the modulator element medium and $v$ is the velocity of the acoustic wave in the modulator element medium.

Also,

$$\tan\theta = \frac{s}{2D} \qquad\qquad \text{Equation 2}$$

Where s is beam separation (approximate distance between the optical axes of the zeroth and first order beams) at the output collimator 206 and D is the separation distance between the modulator element and beam return element.

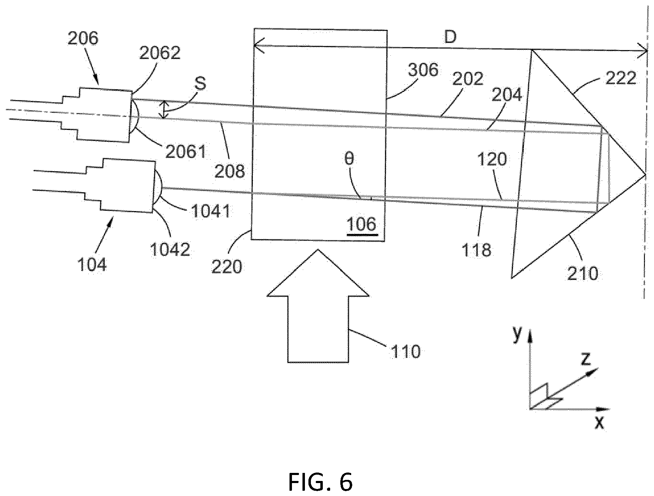

The separation distance D can be defined as the distance between (i) the point of initial divergence of the path of the first order beam from the path of the zeroth order beam inside the modulator element and (ii) the apex or tip of the beam return element farthest from the modulator element. For practical terms and for the purposes of the definition of D in the present disclosure, we assume that the point of initial divergence is at the entrance face of the modulator (left hand face in the Figures). In the present disclosure we therefore approximate the separation distance D to be the horizontal distance (i.e. distance along the x-axis in FIG. 6) between (i) the face of the modulator element furthest from the beam return element and (ii) the apex or tip of the beam return element farthest from the modulator element.

The paths of the zeroth order and first order beams are approximated to begin to diverge approximately at the entrance face of the modulator element and to continue diverge along the path between this face of the modulator element and the beam return element, and continue to diverge on the return path to the same face of the modulator element. That is, the beams diverge over approximately twice the separation distance D approximated as described above. This is the basis of Equation 2. The paths of the returned zeroth and first order beams are then approximated to be realigned parallel to each other once the first order beam exits the modulator element after undergoing diffraction for the second time (again this is presumed to be at the left hand face of the modulator element).

Combining Equations 1 and 2 to eliminate θ (using the small angle approximation of tanθ = sinθ) and rearranging for D:

$$D = \frac{vs}{2\lambda f} \qquad\qquad \text{Equation 3}$$

The above equations and expressions assume negligible refraction of light on entry or exit from modulator element; and that the distance travelled by beam inside the beam return element 200 is twice distance between the corner or tip and the front face (or entry face or hypotenuse) of the beam return element.

FIG. 6 is a schematic of the optical beam intensity modulator shown in FIG. 2. The relative dimensions of FIG. 6 are more representative of reality than those of FIG. 2 but are still exaggerated for illustrative purposes. The components and optical paths of FIG. 6 are identical to those described with reference to FIG. 2 and a detailed description thereof is therefore omitted. FIG. 6 shows the separation distance D, the beam separation s and the angle θ between the zeroth and first order beams after they have passed through the modulator element 200. FIG. 6 also includes further detail relating to the input collimator 104 and the output collimator 206. The input collimator 104 includes a housing 1042 and a collimating lens 1041 nominally representing a clear aperture of the input collimator 104. The output collimator 206 also includes a housing 2062 and a collimating lens 2061 nominally representing a clear aperture of the output collimator 206.

The inventors have recognised that there is an optimum separation distance D. This is primarily due to:

- beam divergence of the zeroth and first order beams
- the beam separation s between these beams at the output collimator 206

These factors can affect the insertion loss (the reduction in power of the first order beam captured at the output collimator 206 compared with the power output from the input collimator 104) and the extinction ratio.

The need for minimum distance arises from the fact that the zeroth order beam (and its tail) should not fall directly on the clear aperture of the output collimator 206. Avoiding this minimizes the direct coupling of the zeroth order beam into the output collimator 206. A separation distance D below the minimum, could lead to the zeroth order beam being coupled into the output fiber in the output collimator 206.

It is assumed that there are no aberrations along the path of the beam, which would further increase the beam separation s to prevent direct coupling. Double passing the beam allows for creating a larger angular misalignment to further increase the coupling losses of the tail of the returned zeroth order beam as well as the direct scattering, which will subtend a higher angle on the collimator.

Insertion loss increases beyond the optimum working distance between the modulator element and the beam return element. The input and output collimators may be designed based on the following constraints, which in turn drive the upper limit of the separation distance D.

1. The total distance between input and output collimator required to achieve separation between zeroth and first order beam.
2. The beam diameter restrictions to maintain faster rise/fall time of the device between the modulator element on- and off-states as well as to fall within the RF transducer optimum range.
3. To obtain a physically compact device, the separation distance D should be as short as possible.

Ideally, an optimum design would have maximum coupling (maximum extinction ratio) corresponding to a separation distance D which is slightly larger than that obtained from equation 3. If criteria 2 and 3 above are not relevant for the particular application, then the upper limit of the separation distance D can be relaxed significantly such that larger maximum separation distance D can be set to even allow the zeroth order beam to miss the modulator element on its return. With the above constraints in mind, the increasing separation beyond optimum distances leads to greater beam spread (beam diameter) as the optical path length increases. If the first order beam diameter is too large at output collimator 206, even though the first order beam is centred on the output collimator 206, a peripheral portion of the beam may not enter the collimator, thus reducing coupling of the first order beam into the collimator. Higher insertion losses partially contribute to a reduced extinction ratio due to lower 'on-state' received power at the collimator.

The extinction ratio can also decrease with increasing separation distance D due to divergence of the zeroth order beam. The beam separation s is typically relatively small near the shorter edge of the separation distance D - of the order of 1-20 times the beam diameter. A wider returned zeroth beam can lead to greater overlap of the zeroth beam and the clear aperture of the output collimator 206, thus decreasing the extinction ratio due to higher 'off-state' received power at the output collimator 206.

If the separation distance D is too short, the beam separation s between the zeroth order and first order beams can become too small, thus leading to reduced extinction ratios due to higher 'off state' received power at the collimator.

The inventors have recognised that these factors lead to an optimum range of separation distances D which provide the highest extinction ratios.

Preferably, D is chosen such that $r < s$, wherein r is the radius of the clear aperture of output collimator 206. Therefore, in embodiments having the highest extinction ratios, D is:

$$\frac{vr}{2\lambda f} < D \qquad \qquad \text{Equation 4}$$

In some, embodiments, s > (r + d4o/2), wherein d4o is the second moment width and r in equation 4 is replaced by r + d4o/2. This way, negligible power enters the collimator as the intensity of the zeroth order beam drops to $1/e^2$ of its maximum value at the edge of the clear aperture of the output collimator.

The separation distance D may also have an upper limit but the present disclosure is not limited thereto. As discussed above, several factors affect this upper limit including increased insertion loss at higher separation distance D, lower extinction ratios at higher separation distance D and the need for D to be as small as possible in some designs in which compactness is desirable. The upper limit therefore depends on the implementational requirements. For example, the upper limit of D may be driven by insertion loss, package compactness, and the modulator element rise/fall time requirements. The upper limit may be:

$$\frac{vr}{\lambda f} > D \qquad \qquad \text{Equation 5}$$

Alternatively, the upper limit of D may be 75%, 125%, 150% or even double the value of the expression on the left hand side of equation 5.

Alternatively, the upper limit of the separation distance may be set so that the extinction loss is not reduced below 10db, optionally 5dB, optionally 3dB, optionally 1dB of the maximum possible extinction ratio. Alternatively, or in addition, the upper limit of the separation distance may be set so that the insertion loss is not increased beyond 10db, optionally 5dB, optionally 3dB, optionally 1dB of the minimum possible insertion loss. Alternatively, or in addition, upper limit of the separation distance D may be set so that at the upper limit, the zeroth order beam misses the modulator element completely upon return from the beam return element.

The input collimator 104 and output collimator 206 are preferably placed as close to the modulator element as possible so as to maintain a compact volume of the optical beam intensity modulator. Optionally, the input collimator 104 and output collimator 206 are separated from the modulator element by a horizontal distance (distance in the x-axis in FIG. 6) of less than the separation distance D.

A minimum physical separation between input and output collimators may be at least larger than the outer radius of the collimator + half of d4sigma of the beam. Optionally, the input collimator 104 is closer to the AO cell than (or in front of) the extraction output collimator 206 to shadow any back reflections and back scatter from the front face of the AO cell.

In an example, the width of the modulator element (dimension from left to right in e.g. FIG. 6) is 6 mm, the wavelength of the light from the input collimator 104 is 780 nm, the RF frequency inside the modulator element 200 is 200 MHz, the acoustic velocity for $TeO_2$ (the modulator element material in this case) is 4260 metres per second, the collimator clear aperture radius is 1 mm, and the distance between the input collimator 104 and the modulator element is 7 mm. According to the criteria above, the minimum separation is about 16 mm, whereas the preferred separation distance D is about 30 mm.

The above equation works as guiding principle for setting the separation distance D. Nevertheless, the separation distance D for any of the optical beam intensity modulators described herein can be optimised to maximise the extinction ratio. Due to the competing factors affecting extinction ratio described above, the inventors have recognised that the optical beam intensity modulator can be improved using a calibration or optimisation method for determining the separation distance D.

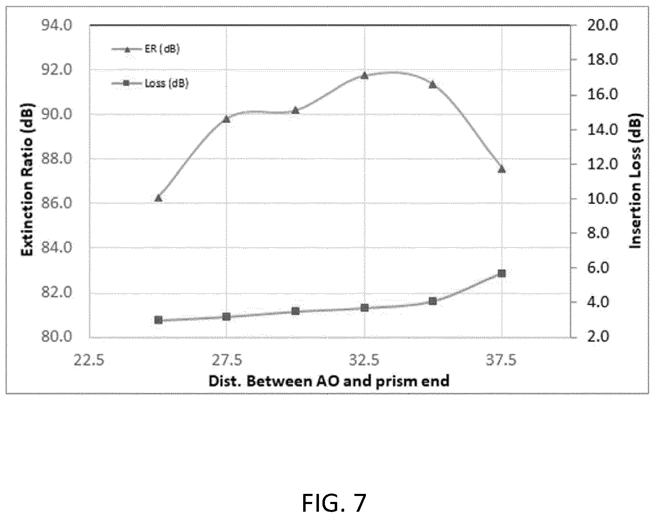

FIG. 7 shows empirically-derived data illustrating the relationship between separation distance D in mm (x-axis) and (i) the extinction ratio in dB (triangle data points/ left hand y-axis) and (ii) the insertion loss in dB (square data points/ right hand y-axis) for an example optical beam intensity modulator of the type shown in FIG. 6. In this example, insertion loss increases with increasing distance. However, the collimators can be optimised to have flatter coupling performance in the region close to high extinction ratio. The relationship between extinction ratio and D is non-linear.

As shown in the example of FIG. 7, a maximum extinction ratio appears at a distance of around 30mm and there is a significant deviation from this maximum with increasing and decreasing separation distances either side of the maximum. The decrease in extinction ratio at shorter separation distance D is due to insufficient separation between the returned zeroth order beam and the returned first order beam. Whereas for larger separation distance D, the reduced extinction ratio is a result of (i) increased losses in coupling of the returned first order beam and (ii) increasing diameter of the zeroth beam (due to the effect of beam divergence over greater distances) which could possibly lead to some of the tail of the returned zeroth order beam to fall on the aperture of the output collimator 206. The extinction ratio is a difference (in dB) between coupled power of the returned first order beam and the returned zeroth order beam. Hence, if the coupling of the returned first order beam decreases, insertion loss increases and extinction ratio decreases.

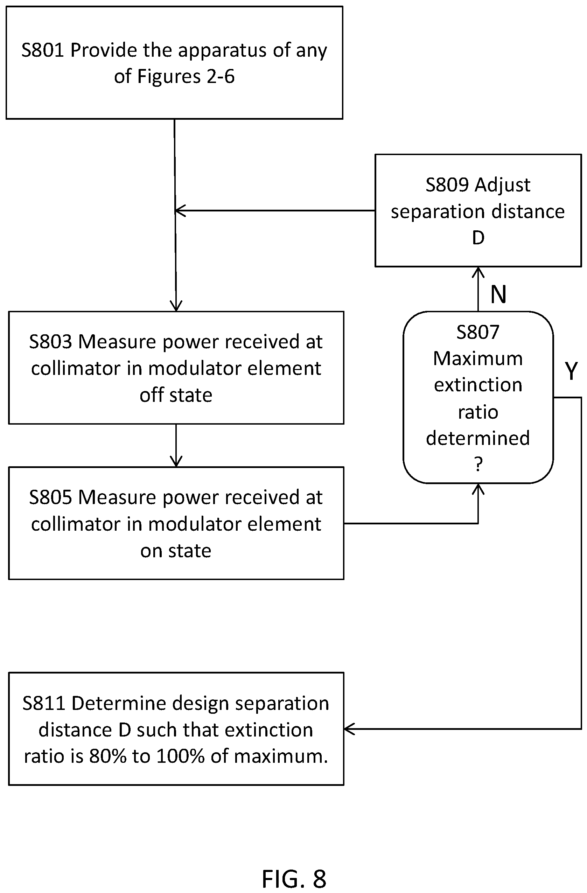

FIG. 8 shows a flow chart illustrating a method for determining an optimal separation distance D.

At step S801, there is provided any of the optical beam intensity modulators described in the present disclosure with reference to Figures 2-6. In this initial arrangement, the beam return element 200 is positioned according to an initial separation distance D (defined as described above). The initial separation distance D may be such that $s = r$ but the present disclosure is not limited thereto, for example the initial separation distance D may be such that $s$ is equal to or greater than $2r$, less than $r$ or any value between $r$ and $2r$.

In step S803, a beam is output from the input collimator 104 when the modulator element is in the off-state such that the zeroth, undeviated beam 118, having passed through the modulator element 106, enters the beam return element 200 and is returned back through the modulator element in the general direction of the output collimator 206 as shown in FIG. 6.

In step S805, the modulator element 106 is then turned on (by application of the RF signal) and the first order diffracted beam 120, deviates from the path of the zeroth order beam 118 upon entry into the modulator element. The beam return element 200 reflects the first order beam along path 204 and the first order beam enters the modulator element once more to be diffracted again along path 208. The beam return element is rotated/titled to maximise the diffraction efficiency for the 1st order on the return pass Then, the optical axis of the output collimator 206 is adjusted to maximise coupling of the 1st order beam as also shown in FIG. 6.

At step S807, the extinction ratio is then determined based on the power received at the output collimator 206 when the modulator element is off versus when it is on. In particular, the extinction ratio is the power received in the modulator on-state divided by the power received in the modulator off-state. If the determined extinction ratio is not yet a peak (or maximum) extinction ratio, then at step S809 the separation distance D is adjusted and steps S803, S805 and S807 are repeated. If the determined extinction ratio is a peak extinction ratio, then at step S811, the separation distance D of the optical beam intensity modulator is determined based on the peak extinction ratio. A peak extinction ratio may be determined by comparing one or more empirically obtained extinction ratios with known data or may be obtained by performing these steps over three or more different separation distances and plotting or analysing these values to determine a peak value.

In an optimal arrangement, the separation distance D is such that the extinction ratio is the maximum extinction ratio whilst the insertion loss is minimum. However, the present disclosure is not limited thereto and the separation distance D may be chosen in step S811 such that the extinction ratio is within 80-100%, optionally 90-100%, optionally 95-100%, optionally 98-100% of the maximum extinction ratio. The separation distance D may be chosen in step S811 such that the extinction ratio is within 10dB, optionally 5dB optionally 3dB optionally 1dB of the maximum extinction ratio.

The inventors have recognised that the optimum extinction ratio depends on the characteristics of the optical beam intensity modulator and that in some circumstances this empirical method can improve the theoretical approach described herein. That is, this method can be used to refine the separation distance D calculated based on equations 1-4 and the constraints specified herein to determine optimum set up for maximal extinction ratio. Alternatively, the calculated separation distance D may be used without the optimisation method described with reference to FIG. 8.

It will also be appreciated that the optimisation method may be used to determine the separation distance D without first determining an initial separation distance theoretically (for example based on Equations 3 or 4). The method can be advantageous if the properties of the optical beam intensity modulator are difficult to ascertain or if environmental conditions affect the operation of the device.

The angle and position in the plane of input collimator may be adjusted to maximise the diffraction efficiency in the 1st order after first pass through the modulation element. In each round of making the first and second intensity measurements, one or more of the following two adjustments may be made to the output collimator 206:

1. The receiver is angled (or oriented) such that its optical axis is parallel with the returned first order beam (or such that the propagation direction of the first order beam at the receiver is normal to the receiving face of the collimator).

2. The position of the optical axis of the receiver is aligned to be coaxial with the optical axis of the first order beam such that the receiver receives the maximum possible energy of the first order beam.

The above adjustments may be made just once at the beginning of the method (between steps S801 and S803) and/or after the step S809 of adjusting the separation distance D. Steps S803 and S805 are then made at the new angle and position of the output collimator 206.

These steps are not needed if the first order returned beam is already aligned properly and does not change angle or position between rounds of altering the separation distance D.

There may be a further step in the method prior to step S803 to achieve maximum diffraction efficiency for the first order beam by adjusting the position and orientation of the input collimator 104. This is standard procedure in diffractive optics set up and design and a detailed description thereof is therefore omitted.

It may be understood that in any of Figures 2-6, the zeroth and first order beams always exit the right hand face of the modulator element before entering the beam return element, never the bottom or top faces. Both beams enter the beam return element - the angular (and hence vertical) separation of the first and zeroth order beams is very small and so it is not practical to allow the zeroth order beam to pass the (bottom corner of) the beam return element while still allowing the first order beam to enter the beam return element. Therefore, both the zeroth order beam and the first order beam are returned by the beam return element.

The modulator can be used in any appropriate application such as any form of on/off binary signal modulating apparatus, for example spectroscopy (such as Cavity Ring-Down Spectroscopy CRDS) and quantum applications (laser cooling/trapping etc.).

Also described herein are the following numbered clauses:

Clause 1. An optical beam intensity modulator comprising a modulator element arranged to transmit an optical beam along a first path in a first modulator state as a first beam and along a second, deviated path in a second modulator state as a second beam, and a beam return element arranged to return a transmitted beam to the modulator element.

Clause 2. The modulator of clause 1 in which in the second path is angularly deviated relative to the first path.

Clause 3. The modulator of clause 2 in which the second modulator state is a beam diffraction state.

Clause 4. The modulator of any preceding clause in which the beam return element is arranged to return the first beam and the second beam with further relative deviation.

Clause 5. The modulator of any preceding clause in which the further relative deviation is a spatial deviation.

Clause 6. The modulator of any preceding clause in which the beam return element is arranged to return a transmitted beam at an angle equivalent to the entry angle to the beam return element.

Clause 7. The modulator of clause 6 in which the beam return element comprises one of a retro reflector, prism, corner cube or angled mirror pair.

Clause 8. The modulator of any preceding clause in which the beam return element includes first and second beam return faces and the beam return faces are angled to provide a differing reflection efficiency for the first beam and the second beam.

Clause 9. The modulator of any preceding clause in which the beam return element includes a beam entry face which is angled to reflect the first beam away from the modulator element.

Clause 10. The modulator of any preceding clause in which the modulator element comprises an acousto-optic modulator element.

Clause 11. The modulator of any preceding clause further comprising a beam block arranged to block one of the first and second beams.

Clause 12. The modulator of any preceding clause arranged to transmit the first beam and second beams in different polarisation states, further including a polarisation element arranged to suppress one of said beams.

Clause 13. A modulator system comprising the modulator of any preceding clause, an input beam element for transmitting an optical beam into the modulator element and an output beam element for receiving a returned beam from the modulator element.

Clause 14. The system of clause 13 in which at least one of the input and output beam elements comprise a single mode polarisation maintaining fibre.

Clause 15. The system of clause 13 or clause 14 in which the input beam element is aligned to the modulator element at a first order Bragg angle.

Clause 16. The system of any of clauses 13 to 15 in which the input beam element is aligned to receive the second beam returned from the modulator element

Clause 17. The modulator of clause 4 or 5 in which the beam return element is spatially offset relative to the modulator element to increase the further deviation.

Clause 18. The modulator of clause 17 in which the beam return element is angled relative to the plane of the first and second beam.

Clause 19. An optical beam intensity modulator comprising a modulator element arranged to transmit an optical beam along a first path in a first modulator state and having a first polarisation and a second, spatially deviated path, in a second modulator state, having a second polarisation, and a polarisation element arranged to suppress the beam in one of the first or second polarisation states

Clause 20. The modulator of any of clauses 1-19, further comprising an output beam element for receiving a returned beam from the modulator element, and wherein the modulator element is an acousto-optic element;

wherein a separation distance D between (i) a face of the modulator element farthest from the beam return element and (ii) an apex or tip of the beam return element farthest from the modulator element satisfies the relationship:

$$\frac{vr}{2\lambda f} < D$$

wherein $\lambda$ is the wavelength of the optical beam in the modulator element medium, $f$ is the RF frequency of an acoustic wave in the modulator element and $v$ is the velocity of the acoustic wave in the modulator element, r is the clear aperture of the output beam element.

Clause 21. A method comprising the steps of:

a. providing the modulator of any preceding claim,
b. positioning the beam return element to have a separation distance from the modulator element,
c. detecting a first intensity of the transmitted beam when the modulator element is in the first modulator state,
d. detecting a second intensity of the transmitted beam when the modulator element is in the second modulator state,
e. determining an extinction ratio based on the first intensity and the second intensity,
f. changing the separation distance between the beam return element and the modulator element,
g. repeating steps b-e to determine an extinction ratio maxima,
h. determining a design separation distance between the modulator element and the beam return element based on the extinction ratio maxima.

Clause 22. The method of clause 21, wherein the design separation distance is determined such that the extinction ratio is greater than a threshold percentage of the extinction ratio maxima, optionally wherein the threshold percentage is 90%, optionally 95%, further optionally 98%.

Clause 23. The method of clause 21, wherein the design separation distance is determined such that the extinction ratio is within a threshold range below the extinction ratio maxima, optionally wherein the threshold range is within 10bB, optionally 5dB, optionally 3dB, optionally 1dB below the extinction ration maxima.

Clause 24. An optical beam intensity modulator according to any of clauses 1-20 having the design separation distance determined by the method of clause 21, 22 or 23.

**Claims**

1. An optical beam intensity modulator comprising a modulator element arranged to transmit an optical beam along a first path in a first modulator state as a first beam and along a second, deviated path in a second modulator state as a second beam, and a beam return element arranged to return a transmitted beam to the modulator element.

2. A modulator as claimed in any preceding claim in which the beam return element is arranged to return the first beam and the second beam with further relative deviation, optionally wherein the further relative deviation is a spatial deviation.

3. A modulator as claimed in any preceding claim in which the beam return element is arranged to return a transmitted beam at an angle equivalent to the entry angle to the beam return element.

4. A modulator as claimed in any preceding claim in which the beam return element includes first and second beam return faces and the beam return faces are angled to provide a differing reflection efficiency for the first beam and the second beam.

5. A modulator as claimed in any preceding claim in which the beam return element includes a beam entry face which is angled to reflect the first beam away from the modulator element.

6. A modulator as claimed in any preceding claim arranged to transmit the first beam and second beams in different polarisation states, further including a polarisation element arranged to suppress one of said beams.

7. A modulator system comprising a modulator as claimed in any preceding claim, an input beam element for transmitting an optical beam into the modulator element and an output beam element for receiving a returned beam from the modulator element.

8. A system as claimed in claim 7 in which at least one of the input and output beam elements comprises a single mode polarisation maintaining fibre.

9. A modulator as claimed in any of claims 1-6 in which the beam return element is spatially offset relative to the modulator element to increase the further deviation.

10. A modulator as claimed in any of claims 1-6 in which the beam return element is angled relative to the plane of the first and second beam.

11. A modulator as claimed in any of claims 1-6, 9 or 10, further comprising an output beam element for receiving a returned beam from the modulator element, and wherein the modulator element is an acousto-optic element;

   wherein a separation distance D between (i) a face of the modulator element farthest from the beam return element and (ii) an apex or tip of the beam return element farthest from the modulator element satisfies the relationship:

   $$\frac{vr}{2\lambda f} < D$$

   wherein $\lambda$ is the wavelength of the optical beam in the modulator element medium, $f$ is the RF frequency of an acoustic wave in the modulator element and $v$ is the velocity of the acoustic wave in the modulator element, r is the clear aperture of the output beam element.

12. A method comprising the steps of:

   a) providing the modulator or system of any preceding claim,
   b) positioning the beam return element to have a separation distance from the modulator element,
   c) detecting a first intensity of the transmitted beam when the modulator element is in the first modulator state,
   d) detecting a second intensity of the transmitted beam when the modulator element is in the second modulator state,

e) determining an extinction ratio based on the first intensity and the second intensity,

f) changing the separation distance between the beam return element and the modulator element,

g) repeating steps b-e to determine an extinction ratio maxima,

h) determining a design separation distance between the modulator element and the beam return element based on the extinction ratio maxima.

13. The method of claim 12, wherein the design separation distance is determined such that the extinction ratio is greater than a threshold percentage of the extinction ratio maxima, optionally wherein the threshold percentage is 80%, optionally 90%, optionally 95%, further optionally 98%.

14. The method of claim 12, wherein the design separation distance is determined such that the extinction ratio is within a threshold range below the extinction ratio maxima, optionally wherein the threshold range is within 10bB, optionally 5dB, optionally 3dB, optionally 1dB below the extinction ration maxima.

15. A modulator or system according to any of claims 1-11 having the design separation distance determined by the method of claim 12, 13 or 14.

FIG. 1

FIG. 2

FIG. 3

FIG. 4

FIG. 5

FIG. 6

FIG. 7

S801 Provide the apparatus of any of Figures 2-6

S803 Measure power received at collimator in modulator element off state

S805 Measure power received at collimator in modulator element on state

S807 Maximum extinction ratio determined ?

N

S809 Adjust separation distance D

Y

S811 Determine design separation distance D such that extinction ratio is 80% to 100% of maximum.

FIG. 8

Europäisches
Patentamt

European
Patent Office

Office européen
des brevets

# EUROPEAN SEARCH REPORT

**Application Number**

**EP 23 20 3351**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 883 734 A (SUZUKI MASATOSHI [JP] ET AL) 16 March 1999 (1999-03-16) * figures 1,2 * ----- | 1-15 | INV. G02F1/33 |
| X | US 5 864 421 A (SUZUKI MASATOSHI [JP] ET AL) 26 January 1999 (1999-01-26) * figures 1,2 * ----- | 1-15 | |
| X | US 2010/214648 A1 (GAO PEILIANG [US]) 26 August 2010 (2010-08-26) * figure 1 * ----- | 1-15 | |

|  |
|---|
| **TECHNICAL FIELDS SEARCHED (IPC)** |
| G02F |

The present search report has been drawn up for all claims

| Place of search | Date of completion of the search | Examiner |
|---|---|---|
| The Hague | 15 February 2024 | Gill, Richard |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

## ANNEX TO THE EUROPEAN SEARCH REPORT
## ON EUROPEAN PATENT APPLICATION NO.

EP 23 20 3351

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2024

| Patent document cited in search report | | Publication date | Patent family member(s) | | Publication date |
|---|---|---|---|---|---|
| US 5883734 | A | 16-03-1999 | JP | 3410287 B2 | 26-05-2003 |
| | | | JP | H09281530 A | 31-10-1997 |
| | | | US | 5883734 A | 16-03-1999 |
| US 5864421 | A | 26-01-1999 | FR | 2749407 A1 | 05-12-1997 |
| | | | JP | 3419993 B2 | 23-06-2003 |
| | | | JP | H09318986 A | 12-12-1997 |
| | | | US | 5864421 A | 26-01-1999 |
| US 2010214648 | A1 | 26-08-2010 | CN | 101672988 A | 17-03-2010 |
| | | | US | 2010214648 A1 | 26-08-2010 |

EPO FORM P0459

For more details about this annex : see Official Journal of the European Patent Office, No. 12/82